# EUROPEAN PATENT APPLICATION

(11) **EP 4 271 042 A1**
(43) Date of publication of application: **01.11.2023**
(21) Application number: 23169398.7
(22) Date of filing: 24.04.2023
(51) Int. Cl.: H04W 36/00, H04W 92/20, H04L 5/00

(54) **RELEASE-17 (REL-17) SECONDARY NODE (SN)-INITIATED INTER-SN CONDITIONAL PSCELL CHANGE**

(30) Priority: 25.04.2022 US 202263334458 P
(71) Applicant: INTEL Corporation, Santa Clara, CA 95054 (US)
(72) Inventor: HAN, Jaemin, Portland, OR, 97229 (US); LI, Ziyi, Beijing, 100190 (CN)
(74) Representative: Viering, Jentschura & Partner mbB Patent- und Rechtsanwälte

(57) **Abstract**

An apparatus of an access node configured for operation in a fifth generation (5G) network, the apparatus may include processing circuitry configured to: generate a message with an information element (IE) comprising data forwarding addresses of multiple candidate secondary nodes (SNs); and provide the message to a source secondary node (SN).

## Description

### Technical Field

Aspects of this disclosure may include various embodiments that may generally relate to the field of wireless communications.

### Background

Mobile communication has evolved significantly from early voice systems to today's highly sophisticated integrated communication platform. The next generation wireless communication system, 5G, or new radio (NR), and developing wireless mobile communication technologies may provide access to information and sharing of data by various users and applications.

### Brief Summary of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 depicts the stage-2 descriptions captured in TS 37.340;
FIG. 2 illustrates an exemplary conditional SN change - SN initiated;
FIG. 3 illustrates an exemplary conditional SN change procedure - SN initiated;
FIG. 4 illustrates a network 400 in accordance with various embodiments;
FIG. 5 schematically illustrates a wireless network 500 in accordance with various embodiments;
FIG. 6 is a block diagram illustrating components, according to some example embodiments;
FIG. 7 shows an exemplary process.

### Detailed Description

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

This disclosure is related to RAN3. RAN3 refers to Radio Access Network (RAN) Working Group 3, that is a technical working group within the 3rd Generation Partnership Project (3GPP), being responsible for the overall UTRAN/E-UTRAN/NG-RAN architecture and the specification of protocols for the related network interfaces within the context of the 3GPP mobile communication standard. UTRAN stands for Universal Terrestrial Radio Access Network and is the RAN technology used in the 3G mobile communication standard known as Universal Mobile Telecommunications System (UMTS). E-UTRAN stands for Evolved Universal Terrestrial Radio Access Network and is the RAN technology used in the 4G mobile communication standard known as Long-Term Evolution (LTE). NG-RAN stands for Next-Generation Radio Access Network and is the RAN technology used in the 5G mobile communication standard known as 5G New Radio (5G NR).

Rel-17 Multi Radio - Dual Connectivity (MR-DC) enhancement relates to conditional PSCell (e.g., the primary cell (PCell) under a secondary cell group (SCG)) change/addition scenarios in MR-DC that were leftovers from Rel-16 mobility enhancement work item (WI):

1. The objective of this work item is to specify enhancements to multi-radio dual connectivity (MR-DC) related scenarios. At least the following topics should be considered in the work:
1. Support efficient activation/de-activation mechanism for one SCG and secondary cells (SCells)
   - Support for one SCG applies to (Next Generation, NG) E-UTRA NR Dual Connectivity (EN-DC), and NR-DC [RAN2, RAN3, RAN4]
   - Support for SCells applies to NR Carrier Aggregation (CA), based on RAN1 leading mechanisms [RANI, RAN2, RAN4]
   - This objective applies to Frequency Range 1 and Frequency Range 2 (FR1 and FR2 respectively)
2. Support of conditional PSCell change/addition [RAN2,RAN3, RAN4]
   - support scenarios which are not addressed in Rel-16 NR mobility WI

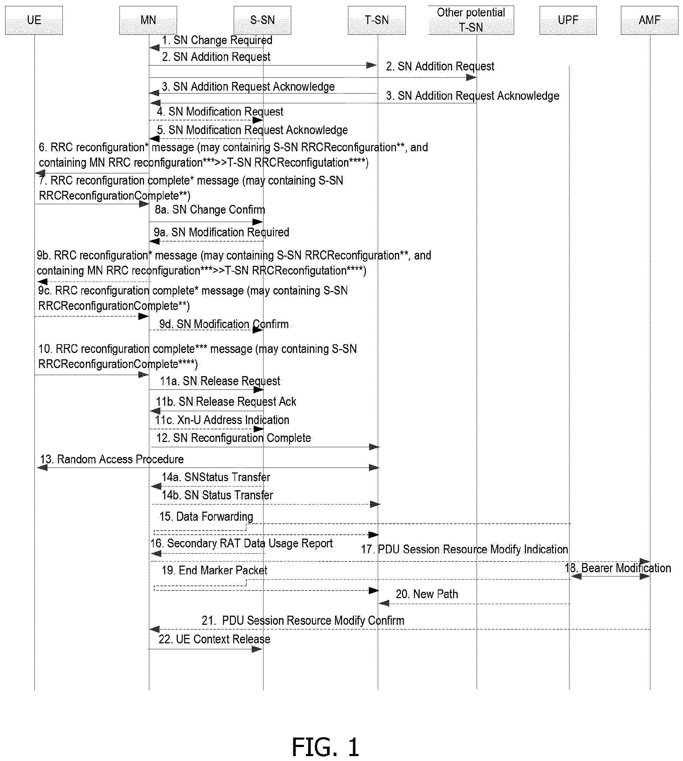

During conditional PSCell change/addition, multiple potential target PSCells can be prepared in advance among which the UE accesses one target PSCell satisfying configured conditions. The multiple potential target PSCells can be prepared within the same Secondary Node (SN) that has been serving the UE, or can be prepared with another SN (i.e. inter-SN conditional PSCell change, a.k.a., inter-SN CPC). The inter-SN CPC can also be initiated by the SN that has been serving the UE (called, SN-initiated inter-SN CPC) or be initiated by the master node (MN) (called, MN-initiated inter-SN CPC). FIG. 1 depicts the stage-2 descriptions captured in TS 37.340 [2] for SN-initiated inter-SN CPC in case of MR-DC with 5GC (i.e. as conditional SN change procedure SN initiated [2]; [2] referring to TS 37.340, E-UTRA and NR; Multi-connectivity; Stage 2 (Release 17).
///////////////irrelevant operations skipped/////////////////

8a. If an SN RRC response message is included, the MN informs the source SN with the SN RRC response message (RRCReconfigutationComplete**) for the source SN via SN Change Confirm message.

The MN sends the SN Change Confirm message towards the Source SN to indicate that CPC is prepared, and in such case the source SN continues providing user data to the UE. If early data forwarding is applied, the MN informs the source SN the data forwarding addresses as received from the target SN, the source SN, if applicable, starts early data forwarding. The Packet Data Convergence Protocol (PDCP) Protocol Data Unit (PDU) and/or PDCP Service Data Unit (SDU) forwarding may take place during early data forwarding. In case multiple Target SNs are prepared, the MN includes a list of Target SN ID and list of data forwarding addresses to the source SN.
///////////////irrelevant operations skipped////////////////////////////////

Note that Rel-17 WI [1] aimed to enhance both EN-DC and MR-DC with 5GC options, so the similar call flow has been captured for EN-DC as well in TS 37.340 [2]; [1] referring to RP-193249, "New WID on further enhancements on Multi-Radio Dual-Connectivity ", Huawei (The latest WID is in RP-201040).

Here in SN-initiated inter-SN CPC, the source SN initiates the inter-SN conditional PSCell change by sending the SN CHANGE REQUIRED message (step 1). The MN prepares multiple potential target PSCells with another candidate target SNs (steps 2-5) and configures to the UE by RRC (step 6). Once successfully configured, the UE informs to the network (step 7), and MN informs to the source SN by sending the SN CHANGE CONFIRM message (step 8a). During this process, as highlighted above, it was agreed that the SN CHANGE CONFIRM message includes a list of prepared candidate target SN IDs as well as a list of data forwarding addresses from them, so that data forwarding (if applicable) can be initiated from the source SN to those candidate target SNs before the UE executes conditional PSCell change and accesses to one of the configured PSCells (among candidate target SNs).

However, looking at TS 36.423 [3], [3] referring to TS 36.423, E-UTRAN; X2 Application Protocol (X2AP) (Release 17), (X2AP for EN-DC) and TS 38.423 [4], [4] referring to TS 38.423, NG-RAN; Xn Application Protocol (XnAP) (Release 17), (XnAP for MR-DC with 5GC), in the legacy specifications the Secondary gNB (SgNB) CHANGE CONFIRM (X2AP) and SN CHANGE CONFIRM (XnAP) messages are able to provide data forwarding addresses "from only one target SN". In other words, in the legacy specifications there is no mechanism for MN to supply data forwarding addresses of "multiple" candidate target SNs via the SgNB CHANGE CONFIRM (X2AP) and SN CHANGE CONFIRM (XnAP) messages, which is not aligned with what has been captured in stage-2 TS 37.340 [2] (see above).

Though it was announced that Rel-17 MR-DC enhancement works were completed, in fact, in legacy specifications stage-2 and stage-3 specs are not aligned in terms of providing data forwarding addresses of multiple candidate target SNs from MN to the source SN and thus, unfortunately, early data forwarding from the source SN in case of SN-initiated inter-SN CPC does not work. Here some in-depth analysis is provided below:

In X2AP [3], the SgNB CHANGE CONFIRM message contains the E-UTRAN Radio Access Bearers (E-RABs) to be Release List IE (optional), but it only provides data forwarding addresses (per E-RAB) from one target SN and doesn't provide any context on which target SN these forwarding addresses are for. And using the E-RABs to be Release List IE doesn't look suitable for SN-initiated inter-SN CPC because the source SN should continue providing data to the UE.

In XnAP [4], the SN CHANGE CONFIRM message contains the PDU Session SN Change Confirm List IE (optional), but again it only provides forwarding addresses (per PDU session) from one target SN and doesn't provide any context on which target SN these addresses are for.

Note that, in the legacy SN-initiated SN change procedures (i.e. without conditional PSCell change), the SgNB CHANGE CONFIRM (X2AP) or SN CHANGE CONFIRM (XnAP) messages has been the very messages that provides the target SN's DL/UL data forwarding addresses in EN-DC or MR-DC with 5GC, respectively. We understand that Rel-17 MR-DC WI [1] tried to follow this principle, but the job was not done properly.

Therefore, this present disclosure is related to several enhancements to make early data forwarding from the source SN flawlessly work for multiple candidate target SNs in case of SN-initiated inter-SN conditional PSCell change was used in EN-DC and MR-DC with 5GC.

Aspects include: 1) Enhance the SgNB CHANGE CONFIRM (X2AP) or SN CHANGE CONFIRM (XnAP) messages, to enable MN to be able to provide data forwarding addresses of multiple candidate target SNs to the source SN as originally described in stage-2.

Aspects include: 2) Provide data forwarding addresses of multiple candidate target SNs from MN to the source SN via other signaling means.

Aspects associated with the described signaling and information in this disclosure enable that early data forwarding form the source SN could work for multiple candidate target SNs during SN-initiated inter-SN conditional PSCell change scenarios.

The ideas described in this disclosure are related to 3GPP X2AP TS 36.423 [3] or XnAP TS 38.423 [4] specifications between the master node and secondary node in EN-DC or MR-DC with 5GC, respectively, or their corresponding stage-2 specification of 3GPP TS 37.340 [2].

Some aspects may include (e.g. Embodiment 1): Enhance the SgNB CHANGE CONFIRM (X2AP) or SN CHANGE CONFIRM (XnAP) messages, to enable MN to be able to provide data forwarding addresses of multiple candidate target SNs to the source SN as originally described in stage-2.

The limitation of carrying data forwarding addresses from only one target SN could be mitigated by enhancing the SgNB CHANGE CONFIRM (X2AP) or SN CHANGE CONFIRM (XnAP) messages directly.

One possible implementation for X2AP and for XnAP are as follows, including information provided in, in particular with respect to TS 36.423, rows including information element (IE)/Group Names associated with Data Forwarding Address for E-RABs List, Data Forwarding Address for E-RABs Item, E-RAB ID, and DL Forwarding GTP Tunnel Endpoint. Furthermore, in particular with respect to TS 38.423, Information Confirm IE/Group Name in an S-NODE CHANGE CONFIRM may include, rows including information element (IE)/Group Names associated with Data Forwarding Address for PDU Sessions List, PDU Session Resource Change Confirm Info - SN terminated, Data Forwarding Address for PDU Sessions Item, PDU Session ID.

For TS 36.423

### 9.1.4.18 SGNB CHANGE CONFIRM

This message is sent by the Master eNB (MeNB) to inform the en-gNB about the successful change.
Direction: MeNB → en-gNB.

| **IE/Group Name** | **Presenc e** | **Range** | **IE type and reference** | **Semantics descriptio n** | **Criticality** | **Assigned Criticality** |
|---|---|---|---|---|---|---|
| Message Type | M | | 9.2.13 | | YES | reject |
| MeNB UE X2AP ID | M | | eNB UE X2AP ID 9.2.24 | Allocated at the MeNB. | YES | ignore |
| SgNB UE X2AP ID | M | | en-gNB UE X2AP ID 9.2.100 | Allocated at the en-gNB. | YES | ignore |
| **E-RABs to be Released List** | | *0*..*1* | | | YES | ignore |
| **>E-RABs To Be Released Item** | | *1* .. | | | - | |
| | | <*maxnoofBeare rs*> | | | | |
| >>E-RAB ID | M | | 9.2.23 | | - | |
| >>EN-DC Resource Configuration | M | | EN-DC Resource Configurati on 9.2.108 | Indicates the PDCP and Lower Layer MCG/SCG configurati on. | - | |
| >>CHOICE *Resource Configuration* | M | | | | | |
| *>>>PDCP present in SN* | | | | This choice tag is used if the *PDCP at SgNB* IE in the *EN-DC Resource Configurati on* IE is set to the value "present". | | |
| >>>>UL Forwarding GTP Tunnel Endpoint | O | | GTP Tunnel End point 9.2.1 | Identifies the X2 transport bearer used for forwarding of UL PDUs | - | |
| >>>>DL Forwarding GTP Tunnel Endpoint | O | | GTP Tunnel End point 9.2.1 | Identifies the X2 transport bearer used for forwarding of DL PDUs | - | |
| *>>>PDCP not present in SN* | | | | This choice tag is used if the *PDCP at SgNB* IE in the *EN-DC Resource Configurati on* IE is set to the value "not present". | | |
| Criticality Diagnostics | O | | 9.2.7 | | YES | ignore |
| MeNB UE X2AP ID Extension | O | | Extended | Allocated at the MeNB | YES | ignore |
| | | | eNB UE | | | |
| | | | X2AP ID | | | |
| | | | 9.2.86 | | | |
| **Conditional PSCell Change Information Confirm** | O | | | | YES | reject |
| **>Multiple Target S-NG-RAN Node List** | | *1* | | | - | |
| >>Multiple Target S-NG-RAN Node Item | | *1* .. | | | - | |
| | | *<maxnoofTarge tSNs>* | | | | |
| >>>Target SgNB ID | M | | Target SgNB ID Information 9.2.102 | | - | |
| >>>Candidate PSCell ID List | | *1* | | | - | |
| >>>>Candidate PSCell ID Item | | *1* .. | | | - | |
| | | *<maxnoofPSCe llCandidate>* | | | | |
| >>>>>PSCell ID | M | | NR CGI 9.2.111 | | - | |
| >>>Data Forwarding Address for E-RABs List | | *0*..*1* | | | - | |
| >>>>Data Forwarding Address for E-RABs Item | | *1* .. | | | - | |
| | | *<maxnoofPSCe IICandidate>* | | | | |
| >>>>>E-RAB ID | M | | 9.2.23 | | - | |
| >>>>DL Forwarding GTP Tunnel Endpoint | M | | GTP Tunnel Endpoint 9.2.1 | | - | |
| MeNB to SgNB Container | O | | OCTET STRING | Includes the *RRCRecon figurationC omplete* message as defined in subclause 6.2.2 of TS 38.331 [10]. | YES | ignore |

For TS 38.423

### 9.1.2.12 S-NODE CHANGE CONFIRM

This message is sent by the Master NG-RAN (M-NG-RAN) node to inform the secondary NG-RAN (S-NG-RAN) node that the preparation of the S-NG-RAN node initiated S-NG-RAN node change was successful.
Direction: M-NG-RAN node → S-NG-RAN node.

| **IE/Group Name** | **Presenc e** | **Range** | **IE type and reference** | **Semantics description** | **Criticalit y** | **Assigned Criticality** |
|---|---|---|---|---|---|---|
| Message Type | M | | 9.2.3.1 | | YES | reject |
| M-NG-RAN node UE XnAP ID | M | | NG-RAN node UE | Allocated at the M-NG-RAN node | YES | ignore |
| | | | XnAP ID | | | |
| | | | 9.2.3.16 | | | |
| S-NG-RAN node UE XnAP ID | M | | NG-RAN node UE | Allocated at the S-NG-RAN node | YES | ignore |
| | | | XnAP ID | | | |
| | | | 9.2.3.16 | | | |
| **PDU Session SN Change Confirm List** | | *0*..*1* | | | YES | ignore |
| **>PDU Session SN Change Confirm Item** | | *1* .. | | NOTE: If the *PDU Session Resource Change Confirm Info* - *SN terminated* IE is not present in a *PDU Session SN Change Confirm Item* IE, abnormal conditions as specified in clause 8.3.5.4 apply. | - | |
| | | *<maxno* of *PDUses sions>* | | | | |
| >>PDU Session ID | M | | 9.2.3.18 | | - | |
| >>PDU Session Resource Change Confirm Info - SN terminated | O | | 9.2.1.19 | | - | |
| Criticality Diagnostics | O | | 9.2.3.3 | | YES | ignore |
| **Conditional PSCell Change Information Confirm** | O | | | | YES | reject |
| **>Multiple Target S-NG-RAN Node List** | | *1* | | | - | |
| **>>Multiple Target S-NG-RAN Node Item** | | *1* .. | | | - | |
| | | *<maxno ofTarget SNs>* | | | | |
| >>>Target S-NG-RAN node ID | M | | Global NG-RAN Node ID | | - | |
| | | | 9.2.2.3 | | | |
| **>>>Candidate PSCell ID List** | | 1 | | | - | |
| **>>>>Candidate PSCell ID Item** | | *1* .. | | | - | |
| | | *<maxno ofPSCel lCandid ate>* | | | | |
| >>>>>PSCell ID | M | | NR CGI 9.2.2.7 | | - | |
| >>>Data Forwarding Address for PDU Sessions List | | *0*..*1* | | | - | |
| >>>>Data Forwarding Address for PDU Sessions Item | | *1* .. | | | - | |
| | | *<maxno* of *PDUses sions>* | | | | |
| >>>>>PDU Session ID | M | | 9.2.3.18 | | - | |
| >>>>PDU Session Resource Change Confirm Info - SN terminated | M | | 9.2.1.19 | | - | |
| M-NG-RAN node to S-NG-RAN node Container | O | | OCTET STRING | Includes the RRCReconfiguration Complete message as defined in subclause 6.2.2 of TS 38.331 [10]. | YES | ignore |

Some aspects may include (e.g. Embodiment 2): Provide data forwarding addresses of multiple candidate target SNs from MN to the source SN via other signaling means.

In this embodiment, the SgNB CHANGE CONFIRM (X2AP) or SN CHANGE CONFIRM (XnAP) messages are left intact. Instead, other signaling means from MN to the source SN is used to provide data forwarding addresses of multiple candidate target SNs.

In EN-DC and MR-DC with 5GC, providing data forwarding addresses from MN to SN has been performed by the DL DATA FORWRADING ADDRESS INDICATION and Xn-U ADDRESS INDICATION messages. In one implementation, we can use those messages as much as possible. For example, we could make MN to invoke those procedures separately for each target SN, together with sending the SgNB/SN CHANGE CONFIRM message. In this case, we only need to include the (optional) target SN ID onto those messages while updating stage-2 descriptions, which incurs less stage-3 changes compared to Embodiment 1.

One possible implementation for the stage-2 TS 37.340 [2], X2AP [3], and XnAP [4] is as follows (the suggested change is highlighted):

For TS 37.340

### 10.5.1 EN-DC

///////////////irrelevant operations skipped/////////////////////////////////////

SN initiated conditional inter-SN Change

The SN initiated conditional inter-SN change procedure is used to configure CPC configuration.

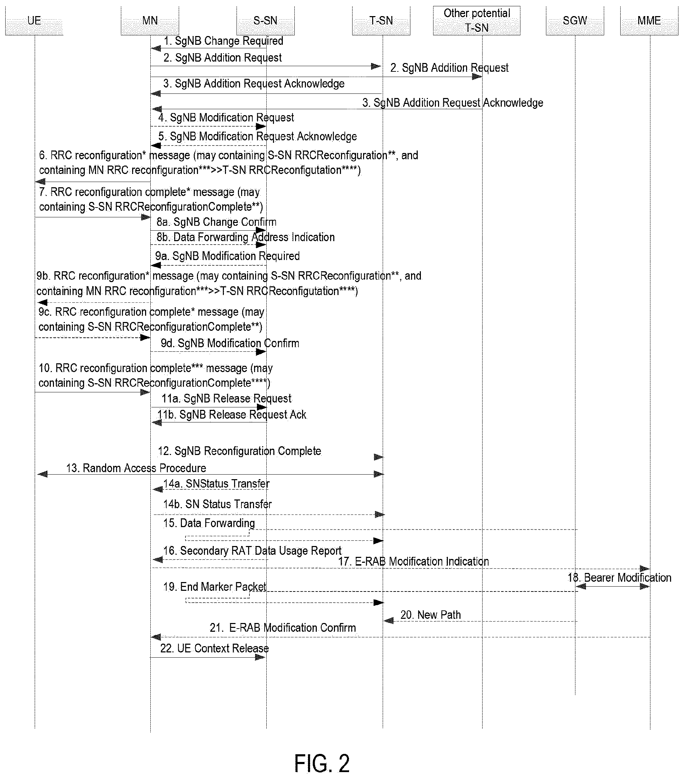

The SN initiated conditional inter-SN change procedure may also be initiated by the source SN, to modify the existing CPC configuration, or to trigger the release of the target SN by cancellation of all the prepared PSCells at the target SN and releasing the CPC related UE context at the target SN. FIG. 2 illustrates an exemplary conditional SN change - SN initiated. 8a-8b (i.e. along with corresponding steps in FIG. 2). If an NR RRC response message is included, the MN informs the source SN with the NR RRC response message (RRCReconfigutationComplete**) for the source SN via SgNB Change Confirm message. The MN sends the SgNB Change Confirm message towards the Source SN to indicate that CPC is prepared, and in such case the source SN continues providing user data to the UE. If early data forwarding is applied, the MN triggers the Data Forwarding Address Indication procedure to the source SN to inform the source SN the data forwarding addresses as received from the target SN, the source SN, if applicable, starts early data forwarding. The PDCP SDU forwarding may take place during early data forwarding. In case multiple Target SNs are prepared, the MN includes a list of Target SgNB ID in the SgNB Change Confirm message to the source SN, and the Data Forwarding Address Indication procedure is invoked separately for each target SN toward the source SN including the Target SgNB ID. ///////////////irrelevant operations skipped/////////////////////

### 10.5.2 MR-DC with 5GC

/////////////////////////irrelevant operations skipped/////////////////////////

### SN initiated conditional inter-SN Change

The SN initiated conditional inter-SN change procedure is used for CPC configuration and CPC execution.

The SN initiated conditional inter-SN change procedure may also be initiated by the source SN, to modify the existing CPC configuration, or to trigger the release of the target SN by cancellation of all the prepared PSCells at the target SN and releasing the CPC related UE context at the target SN.

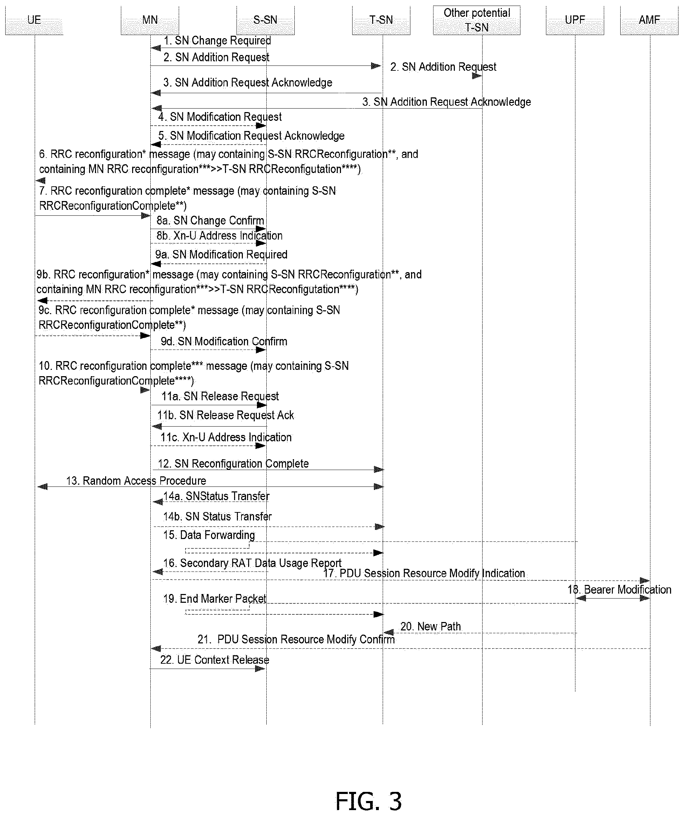

FIG. 3 illustrates an exemplary conditional SN change procedure - SN initiated.
///////////////irrelevant operations skipped/////////////////////////

8a-8b (i.e. along with the corresponding steps in FIG. 3). If an SN RRC response message is included, the MN informs the source SN with the SN RRC response message (RRCReconfigutationComplete**) for the source SN via SN Change Confirm message.

The MN sends the SN Change Confirm message towards the Source SN to indicate that CPC is prepared, and in such case the source SN continues providing user data to the UE. If early data forwarding is applied, the MN triggers the Xn-U Address Indication procedure to the source SN to inform the source SN the data forwarding addresses as received from the target SN, the source SN, if applicable, starts early data forwarding. The PDCP SDU forwarding may take place during early data forwarding. In case multiple Target SNs are prepared, the MN includes a list of Target SN ID in the SN Change Confirm message to the source SN, and the Xn-U Address Indication procedure is invoked separately for each target SN toward the source SN including the Target SN ID.
///////////////irrelevant operations skipped////////////////////////////////

For TS 36.423

### 9.1.2.43 DATA FORWARDING ADDRESS INDICATION

This message is sent by the new eNB to indicate to the old eNB forwarding addresses for each E-RAB for which it admits data forwarding.

During a Conditional Handover with EN-DC or Dual Connectivity or Conditional PSCell Change, this message is also used to provide data forwarding related information. In case of EN-DC, the data forwarding related information is transferred from the eNB to the en-gNB, while in case of Dual Connectivity, the data forwarding related information is transferred from the MeNB to the SeNB.
Direction: new eNB → old eNB.
Direction: MeNB → en-gNB (Conditional Handover with EN-DC, Conditional PSCell
Change), MeNB → SeNB (Conditional Handover with Dual Connectivity)

| **IE/Group Name** | **Presenc e** | **Range** | **IE type and reference** | **Semantic s descriptio n** | **Criticality** | **Assigned Criticality** |
|---|---|---|---|---|---|---|
| Message Type | M | | 9.2.13 | | YES | ignore |
| New eNB UE X2AP ID | M | | eNB UE X2AP ID | Allocated at the new eNB | YES | ignore |
| | | | 9.2.24 | | | |
| New eNB UE X2AP ID Extension | O | | Extended eNB UE X2AP ID | Allocated at the new eNB | YES | ignore |
| | | | 9.2.86 | | | |
| Old eNB UE X2AP ID | M | | eNB UE X2AP ID | Allocated at the old eNB | YES | ignore |
| | | | 9.2.24 | | | |
| Old eNB UE X2AP ID Extension | O | | Extended eNB UE X2AP ID | Allocated at the old eNB | YES | ignore |
| | | | 9.2.86 | | | |
| **E-RABs Data Forwarding Address List** | | *1* | | | YES | ignore |
| **> E-RABs Data Forwarding Address Item** | | *1* .. | | | EACH | ignore |
| | | *<maxnoofBear ers*> | | | | |
| >>E-RAB ID | M | | 9.2.23 | | - | |
| >>DL GTP Tunnel Endpoint | M | | GTP Tunnel End point | Identifies the X2 transport bearer used for forwarding of DL PDUs | - | |
| | | | 9.2.1 | | | |
| CHO DC Indicator | O | | ENUMER ATED (true, ...) | Indicating that the DATA FORWAR DING ADDRESS INDICATI ON message is for a Conditiona I Handover. | YES | reject |
| CHO DC Early Data Forwarding Indicator | O | | ENUMER ATED (stop, ...) | | YES | ignore |
| SgNB UE X2AP ID | O | | en-gNB UE X2AP ID | Allocated for EN-DC at the en-gNB. | YES | ignore |
| | | | 9.2.100 | | | |
| CPC Data Forwarding Indicator | O | | ENUMER ATED (triggered, early data transmissi on stop, ...) | Indicates that the DATA FORWAR DING ADDRESS INDICATI ON message is for a Conditiona l PSCell Change. | YES | reject |
| Target SgNB ID | O | | Target SgNB ID Informatio n | Indicating that the DATA FORWAR DING ADDRESS INDICATI ON message is only for that target SgNB for a Conditiona l PSCell Change | YES | ignore |
| | | | 9.2.102 | | | |

It is to be noted that the above table provided for TS 36.423 within 9.1.2.43 DATA FORWARDING ADDRESS INDICATION may include a Target SgNB ID IE/Group Name, of which its details are provided in the corresponding row.

For TS 38.423

### 9.1.1.11 XN-U ADDRESS INDICATION

This message is either sent by the new NG-RAN node to transfer data forwarding information to the old NG-RAN node, or by the M-NG-RAN node to provide either data forwarding or Xn-U bearer address related information for SN terminated bearers to the S-NG-RAN node. Direction: new NG-RAN node → old NG-RAN node, M-NG-RAN node → S-NG-RAN node.

| **IE/Group Name** | **Presenc e** | **Range** | **IE type and reference** | **Semantics description** | **Criticalit y** | **Assigne d Criticalit y** |
|---|---|---|---|---|---|---|
| Message Type | M | | 9.2.3.1 | | YES | reject |
| New NG-RAN node UE XnAP ID reference | M | | NG-RAN node UE XnAP ID | Allocated at the new NG-RAN node | YES | ignore |
| | | | 9.2.3.16 | | | |
| Old NG-RAN node UE XnAP ID reference | M | | NG-RAN node UE XnAP ID | Allocated at the old NG-RAN node | YES | ignore |
| | | | 9.2.3.16 | | | |
| **Xn-U Address Information per PDU Session Resources List** | | *1* | | | YES | reject |
| **>Xn-U Address Information per PDU Session Resources Item** | | *1.. <ma xnoofP DUSes sions*> | | | - | |
| >>PDU Session ID | M | | 9.2.3.18 | | - | |
| >>Data Forwarding Info from target NG-RAN node | O | | Data Forwarding Info from target NG-RAN node | | - | |
| | | | 9.2.1.16 | | | |
| >>Secondary Data Forwarding Info from target NG-RAN node List | O | | 9.2.1.31 | This IE would be present only when the target M-NG-RAN node decide to split a PDU session between MN and SN | YES | ignore |
| >>PDU Session Resource Setup Complete Info - SN terminated | O | | 9.2.1.30 | | - | |
| >>DRB IDs taken into use | O | | DRB List 9.2.1.29 | Indicating the DRB IDs taken into use by the target NG-RAN node, as specified in TS 37.340 [8]. | YES | reject |
| >>Data Forwarding Info from target E-UTRAN node | O | | 9.2.1.35 | | YES | ignore |
| CHO MR-DC Indicator | O | | ENUMERATED (true, ...) | Indicating that the XN-U ADDRESS INDICATION message is for Conditional Handover, as specified in TS 37.340 [8]. | YES | reject |
| CHO MR-DC Early Data Forwarding Indicator | O | | ENUMERATED (stop, ...) | | YES | ignore |
| CPC Data Forwarding indicator | O | | ENUMERATED (triggered, early data transmission stop, ...) | Indicating that the XN-U ADDRESS INDICATION message is for a Conditional PSCell Change. | YES | reject |
| Target S-NG-RAN node ID | O | | Global NG-RAN Node ID | Indicating that the XN-U ADDRESS INDICATION message is only for the target S-NG-RAN node for a Conditional PSCell Change | YES | ignore |
| | | | 9.2.2.3 | | | |

It is to be noted that the above table provided for TS 38.423 within 9.1.1.11 XN-U ADDRESS INDICATION may include a Target S-NG-RAN ID IE/Group Name, of which its details are provided in the corresponding row.

Or alternatively, providing multiple forwarding addresses of multiple candidate target SNs from MN to the source SN can be implemented in any MN-initiated signaling procedure.

### SYSTEMS AND IMPLEMENTATIONS

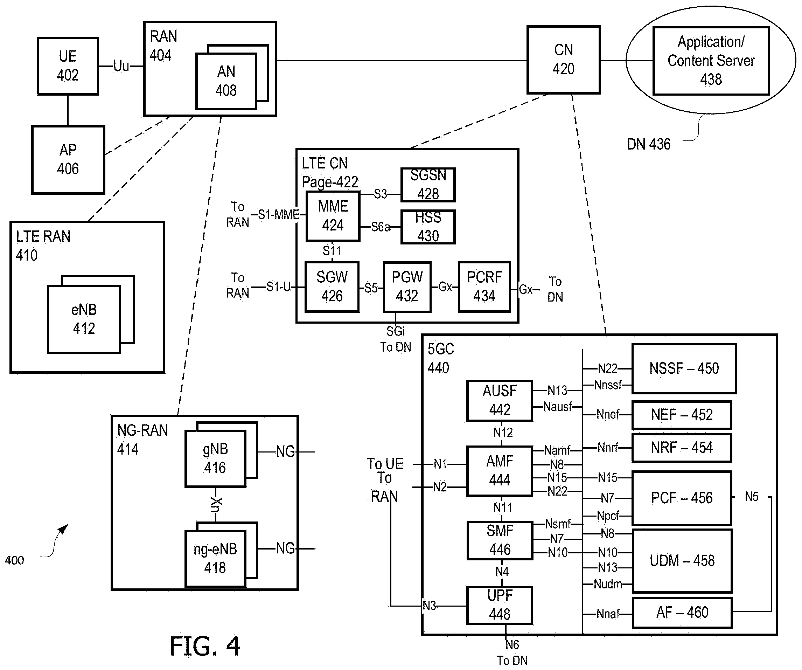

FIGs. 4-6 illustrate various systems, devices, and components that may implement aspects of disclosed embodiments.

FIG. 4 illustrates a network 400 in accordance with various embodiments. The network 400 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 400 may include a UE 402, which may include any mobile or non-mobile computing device designed to communicate with a RAN 404 via an over-the-air connection. The UE 402 may be communicatively coupled with the RAN 404 by a Uu interface. The UE 402 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 400 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 402 may additionally communicate with an AP 406 via an over-the-air connection. The AP 406 may manage a WLAN connection, which may serve to offload some/all network traffic from the RAN 404. The connection between the UE 402 and the AP 406 may be consistent with any IEEE 802.11 protocol, wherein the AP 406 could be a wireless fidelity (Wi-Fi^{®}) router. In some embodiments, the UE 402, RAN 404, and AP 406 may utilize cellular-WLAN aggregation (for example, LWA/LWIP). Cellular-WLAN aggregation may involve the UE 402 being configured by the RAN 404 to utilize both cellular radio resources and WLAN resources.

The RAN 404 may include one or more access nodes, for example, AN 408. AN 408 may terminate air-interface protocols for the UE 402 by providing access stratum protocols including RRC, PDCP, RLC, MAC, and L1 protocols. In this manner, the AN 408 may enable data/voice connectivity between CN 420 and the UE 402. In some embodiments, the AN 408 may be implemented in a discrete device or as one or more software entities running on server computers as part of, for example, a virtual network, which may be referred to as a CRAN or virtual baseband unit pool. The AN 408 be referred to as a BS, gNB, RAN node, eNB, ng-eNB, NodeB, RSU, TRxP, TRP, etc. The AN 408 may be a macrocell base station or a low power base station for providing femtocells, picocells or other like cells having smaller coverage areas, smaller user capacity, or higher bandwidth compared to macrocells.

In embodiments in which the RAN 404 includes a plurality of ANs, they may be coupled with one another via an X2 interface (if the RAN 404 is an LTE RAN) or an Xn interface (if the RAN 404 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 404 may each manage one or more cells, cell groups, component carriers, etc. to provide the UE 402 with an air interface for network access. The UE 402 may be simultaneously connected with a plurality of cells provided by the same or different ANs of the RAN 404. For example, the UE 402 and RAN 404 may use carrier aggregation to allow the UE 402 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 404 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 402 or AN 408 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 404 may be an LTE RAN 410 with eNBs, for example, eNB 412. The LTE RAN 410 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 404 may be an NG-RAN 414 with gNBs, for example, gNB 416, or ng-eNBs, for example, ng-eNB 418. The gNB 416 may connect with SG-enabled UEs using a 5G NR interface. The gNB 416 may connect with a 5G core through an NG interface, which may include an N2 interface or an N3 interface. The ng-eNB 418 may also connect with the 5G core through an NG interface, but may connect with a UE via an LTE air interface. The gNB 416 and the ng-eNB 418 may connect with each other over an Xn interface.

In some embodiments, the NG interface may be split into two parts, an NG user plane (NG-U) interface, which carries traffic data between the nodes of the NG-RAN 414 and a UPF 448 (e.g., N3 interface), and an NG control plane (NG-C) interface, which is a signaling interface between the nodes of the NG-RAN414 and an AMF 444 (e.g., N2 interface).

The NG-RAN 414 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 402 can be configured with multiple BWPs where each BWP configuration has a different SCS. When a BWP change is indicated to the UE 402, the SCS of the transmission is changed as well. Another use case example of BWP is related to power saving. In particular, multiple BWPs can be configured for the UE 402 with different amount of frequency resources (for example, PRBs) to support data transmission under different traffic loading scenarios. A BWP containing a smaller number of PRBs can be used for data transmission with small traffic load while allowing power saving at the UE 402 and in some cases at the gNB 416. A BWP containing a larger number of PRBs can be used for scenarios with higher traffic load.

The RAN 404 is communicatively coupled to CN 420 that includes network elements to provide various functions to support data and telecommunications services to customers/subscribers (for example, users of UE 402). The components of the CN 420 may be implemented in one physical node or separate physical nodes. In some embodiments, NFV may be utilized to virtualize any or all of the functions provided by the network elements of the CN 420 onto physical compute/storage resources in servers, switches, etc. A logical instantiation of the CN 420 may be referred to as a network slice, and a logical instantiation of a portion of the CN 420 may be referred to as a network sub-slice.

In some embodiments, the CN 420 may be an LTE CN 422, which may also be referred to as an EPC. The LTE CN 422 may include MME 424, SGW 426, SGSN 428, HSS 430, PGW 432, and PCRF 434 coupled with one another over interfaces (or "reference points") as shown. Functions of the elements of the LTE CN 422 may be briefly introduced as follows.

The MME 424 may implement mobility management functions to track a current location of the UE 402 to facilitate paging, bearer activation/deactivation, handovers, gateway selection, authentication, etc.

The SGW 426 may terminate an S1 interface toward the RAN and route data packets between the RAN and the LTE CN 422. The SGW 426 may be a local mobility anchor point for inter-RAN node handovers and also may provide an anchor for inter-3GPP mobility. Other responsibilities may include lawful intercept, charging, and some policy enforcement.

The SGSN 428 may track a location of the UE 402 and perform security functions and access control. In addition, the SGSN 428 may perform inter-EPC node signaling for mobility between different RAT networks; PDN and S-GW selection as specified by MME 424; MME selection for handovers; etc. The S3 reference point between the MME 424 and the SGSN 428 may enable user and bearer information exchange for inter-3GPP access network mobility in idle/active states.

The HSS 430 may include a database for network users, including subscription-related information to support the network entities' handling of communication sessions. The HSS 430 can provide support for routing/roaming, authentication, authorization, naming/addressing resolution, location dependencies, etc. An S6a reference point between the HSS 430 and the MME 424 may enable transfer of subscription and authentication data for authenticating/authorizing user access to the LTE CN 420.

The PGW 432 may terminate an SGi interface toward a data network (DN) 436 that may include an application/content server 438. The PGW 432 may route data packets between the LTE CN 422 and the data network 436. The PGW 432 may be coupled with the SGW 426 by an S5 reference point to facilitate user plane tunneling and tunnel management. The PGW 432 may further include a node for policy enforcement and charging data collection (for example, PCEF). Additionally, the SGi reference point between the PGW 432 and the data network 436 may be an operator external public, a private PDN, or an intra-operator packet data network, for example, for provision of IMS services. The PGW 432 may be coupled with a PCRF 434 via a Gx reference point.

The PCRF 434 is the policy and charging control element of the LTE CN 422. The PCRF 434 may be communicatively coupled to the app/content server 438 to determine appropriate QoS and charging parameters for service flows. The PCRF 432 may provision associated rules into a PCEF (via Gx reference point) with appropriate TFT and QCI.

In some embodiments, the CN 420 may be a 5GC 440. The 5GC 440 may include an AUSF 442, AMF 444, SMF 446, UPF 448, NSSF 450, NEF 452, NRF 454, PCF 456, UDM 458, and AF 460 coupled with one another over interfaces (or "reference points") as shown. Functions of the elements of the 5GC 440 may be briefly introduced as follows.

The AUSF 442 may store data for authentication of UE 402 and handle authentication-related functionality. The AUSF 442 may facilitate a common authentication framework for various access types. In addition to communicating with other elements of the 5GC 440 over reference points as shown, the AUSF 442 may exhibit an Nausf service-based interface.

The AMF 444 may allow other functions of the 5GC 440 to communicate with the UE 402 and the RAN 404 and to subscribe to notifications about mobility events with respect to the UE 402. The AMF 444 may be responsible for registration management (for example, for registering UE 402), connection management, reachability management, mobility management, lawful interception of AMF-related events, and access authentication and authorization. The AMF 444 may provide transport for SM messages between the UE 402 and the SMF 446, and act as a transparent proxy for routing SM messages. AMF 444 may also provide transport for SMS messages between UE 402 and an SMSF. AMF 444 may interact with the AUSF 442 and the UE 402 to perform various security anchor and context management functions. Furthermore, AMF 444 may be a termination point of a RAN CP interface, which may include or be an N2 reference point between the RAN 404 and the AMF 444; and the AMF 444 may be a termination point of NAS (N1) signaling, and perform NAS ciphering and integrity protection. AMF 444 may also support NAS signaling with the UE 402 over an N3 IWF interface.

The SMF 446 may be responsible for SM (for example, session establishment, tunnel management between UPF 448 and AN 408); UE IP address allocation and management (including optional authorization); selection and control of UP function; configuring traffic steering at UPF 448 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 444 over N2 to AN 408; and determining SSC mode of a session. SM may refer to management of a PDU session, and a PDU session or "session" may refer to a PDU connectivity service that provides or enables the exchange of PDUs between the UE 402 and the data network 436.

The UPF 448 may act as an anchor point for intra-RAT and inter-RAT mobility, an external PDU session point of interconnect to data network 436, and a branching point to support multi-homed PDU session. The UPF 448 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 448 may include an uplink classifier to support routing traffic flows to a data network.

The NSSF 450 may select a set of network slice instances serving the UE 402. The NSSF 450 may also determine allowed NSSAI and the mapping to the subscribed S-NSSAIs, if needed. The NSSF 450 may also determine the AMF set to be used to serve the UE 402, or a list of candidate AMFs based on a suitable configuration and possibly by querying the NRF 454. The selection of a set of network slice instances for the UE 402 may be triggered by the AMF 444 with which the UE 402 is registered by interacting with the NSSF 450, which may lead to a change of AMF. The NSSF 450 may interact with the AMF 444 via an N22 reference point; and may communicate with another NSSF in a visited network via an N31 reference point (not shown). Additionally, the NSSF 450 may exhibit an Nnssf service-based interface.

The NEF 452 may securely expose services and capabilities provided by 3GPP network functions for third party, internal exposure/re-exposure, AFs (e.g., AF 460), edge computing or fog computing systems, etc. In such embodiments, the NEF 452 may authenticate, authorize, or throttle the AFs. NEF 452 may also translate information exchanged with the AF 460 and information exchanged with internal network functions. For example, the NEF 452 may translate between an AF-Service-Identifier and an internal 5GC information. NEF 452 may also receive information from other NFs based on exposed capabilities of other NFs. This information may be stored at the NEF 452 as structured data, or at a data storage NF using standardized interfaces. The stored information can then be re-exposed by the NEF 452 to other NFs and AFs, or used for other purposes such as analytics. Additionally, the NEF 452 may exhibit an Nnef service-based interface.

The NRF 454 may support service discovery functions, receive NF discovery requests from NF instances, and provide the information of the discovered NF instances to the NF instances. NRF 454 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 454 may exhibit the Nnrf service-based interface.

The PCF 456 may provide policy rules to control plane functions to enforce them, and may also support unified policy framework to govern network behavior. The PCF 456 may also implement a front end to access subscription information relevant for policy decisions in a UDR of the UDM 458. In addition to communicating with functions over reference points as shown, the PCF 456 exhibit an Npcf service-based interface.

The UDM 458 may handle subscription-related information to support the network entities' handling of communication sessions, and may store subscription data of UE 402. For example, subscription data may be communicated via an N8 reference point between the UDM 458 and the AMF 444. The UDM 458 may include two parts, an application front end and a UDR. The UDR may store subscription data and policy data for the UDM 458 and the PCF 456, and/or structured data for exposure and application data (including PFDs for application detection, application request information for multiple UEs 402) for the NEF 452. The Nudr service-based interface may be exhibited by the UDR 221 to allow the UDM 458, PCF 456, and NEF 452 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 458 may exhibit the Nudm service-based interface.

The AF 460 may provide application influence on traffic routing, provide access to NEF, and interact with the policy framework for policy control.

In some embodiments, the 5GC 440 may enable edge computing by selecting operator/3rd party services to be geographically close to a point that the UE 402 is attached to the network. This may reduce latency and load on the network. To provide edge-computing implementations, the 5GC 440 may select a UPF 448 close to the UE 402 and execute traffic steering from the UPF 448 to data network 436 via the N6 interface. This may be based on the UE subscription data, UE location, and information provided by the AF 460. In this way, the AF 460 may influence UPF (re)selection and traffic routing. Based on operator deployment, when AF 460 is considered to be a trusted entity, the network operator may permit AF 460 to interact directly with relevant NFs. Additionally, the AF 460 may exhibit an Naf service-based interface.

The data network 436 may represent various network operator services, Internet access, or third party services that may be provided by one or more servers including, for example, application/content server 438.

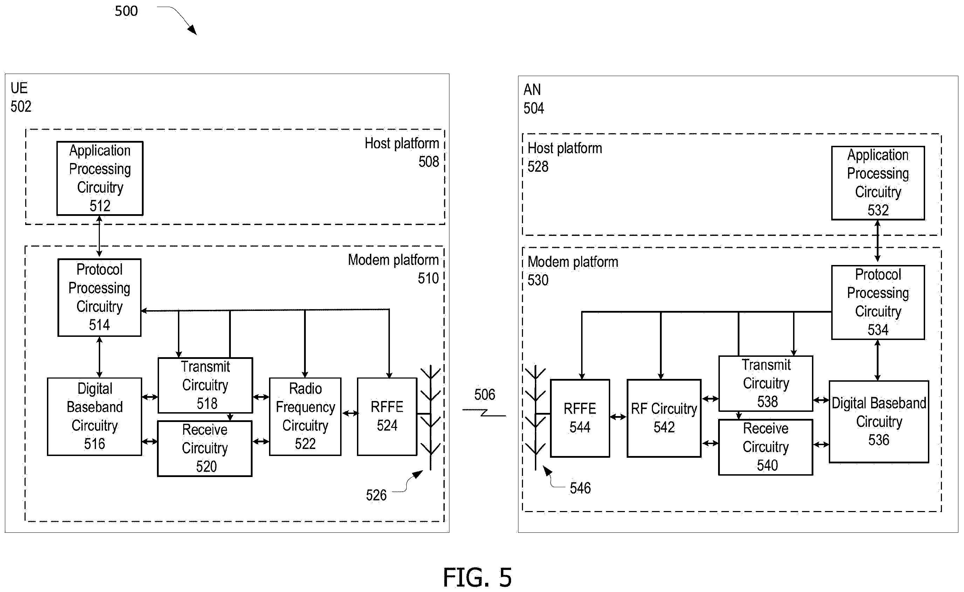

FIG. 5 schematically illustrates a wireless network 500 in accordance with various embodiments. The wireless network 500 may include a UE 502 in wireless communication with an AN 504. The UE 502 and AN 504 may be similar to, and substantially interchangeable with, like-named components described elsewhere herein.

The UE 502 may be communicatively coupled with the AN 504 via connection 506. The connection 506 is illustrated as an air interface to enable communicative coupling, and can be consistent with cellular communications protocols such as an LTE protocol or a 5G NR protocol operating at mmWave or sub-6GHz frequencies.

The UE 502 may include a host platform 508 coupled with a modem platform 510. The host platform 508 may include application processing circuitry 512, which may be coupled with protocol processing circuitry 514 of the modem platform 510. The application processing circuitry 512 may run various applications for the UE 502 that source/sink application data. The application processing circuitry 512 may further implement one or more layer operations to transmit/receive application data to/from a data network. These layer operations may include transport (for example UDP) and Internet (for example, IP) operations

The protocol processing circuitry 514 may implement one or more of layer operations to facilitate transmission or reception of data over the connection 506. The layer operations implemented by the protocol processing circuitry 514 may include, for example, MAC, RLC, PDCP, RRC and NAS operations.

The modem platform 510 may further include digital baseband circuitry 516 that may implement one or more layer operations that are "below" layer operations performed by the protocol processing circuitry 514 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 510 may further include transmit circuitry 518, receive circuitry 520, RF circuitry 522, and RF front end (RFFE) 524, which may include or connect to one or more antenna panels 526. Briefly, the transmit circuitry 518 may include a digital-to-analog converter, mixer, intermediate frequency (IF) components, etc.; the receive circuitry 520 may include an analog-to-digital converter, mixer, IF components, etc.; the RF circuitry 522 may include a low-noise amplifier, a power amplifier, power tracking components, etc.; RFFE 524 may include filters (for example, surface/bulk acoustic wave filters), switches, antenna tuners, beamforming components (for example, phase-array antenna components), etc. The selection and arrangement of the components of the transmit circuitry 518, receive circuitry 520, RF circuitry 522, RFFE 524, and antenna panels 526 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 514 may include one or more instances of control circuitry (not shown) to provide control functions for the transmit/receive components.

A UE reception may be established by and via the antenna panels 526, RFFE 524, RF circuitry 522, receive circuitry 520, digital baseband circuitry 516, and protocol processing circuitry 514. In some embodiments, the antenna panels 526 may receive a transmission from the AN 504 by receive-beamforming signals received by a plurality of antennas/antenna elements of the one or more antenna panels 526.

A UE transmission may be established by and via the protocol processing circuitry 514, digital baseband circuitry 516, transmit circuitry 518, RF circuitry 522, RFFE 524, and antenna panels 526. In some embodiments, the transmit components of the UE 504 may apply a spatial filter to the data to be transmitted to form a transmit beam emitted by the antenna elements of the antenna panels 526.

Similar to the UE 502, the AN 504 may include a host platform 528 coupled with a modem platform 530. The host platform 528 may include application processing circuitry 532 coupled with protocol processing circuitry 534 of the modem platform 530. The modem platform may further include digital baseband circuitry 536, transmit circuitry 538, receive circuitry 540, RF circuitry 542, RFFE circuitry 544, and antenna panels 546. The components of the AN 504 may be similar to and substantially interchangeable with like-named components of the UE 502. In addition to performing data transmission/reception as described above, the components of the AN 508 may perform various logical functions that include, for example, RNC functions such as radio bearer management, uplink and downlink dynamic radio resource management, and data packet scheduling.

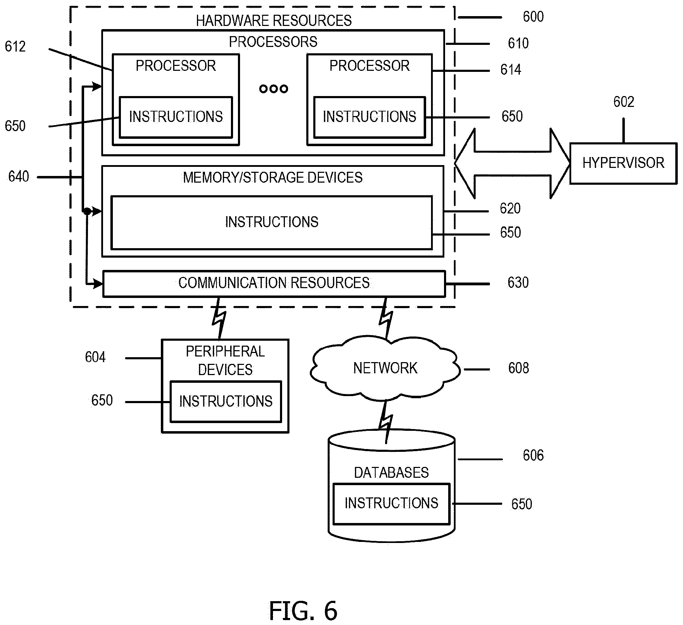

FIG. 6 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 6 shows a diagrammatic representation of hardware resources 600 including one or more processors (or processor cores) 610, one or more memory/storage devices 620, and one or more communication resources 630, each of which may be communicatively coupled via a bus 640 or other interface circuitry. For embodiments where node virtualization (e.g., NFV) is utilized, a hypervisor 602 may be executed to provide an execution environment for one or more network slices/sub-slices to utilize the hardware resources 600.

The processors 610 may include, for example, a processor 612 and a processor 614. The processors 610 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 620 may include main memory, disk storage, or any suitable combination thereof. The memory/storage devices 620 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 630 may include interconnection or network interface controllers, components, or other suitable devices to communicate with one or more peripheral devices 604 or one or more databases 606 or other network elements via a network 608. For example, the communication resources 630 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 650 may comprise software, a program, an application, an applet, an app, or other executable code for causing at least any of the processors 610 to perform any one or more of the methodologies discussed herein. The instructions 650 may reside, completely or partially, within at least one of the processors 610 (e.g., within the processor's cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

### Example Procedures

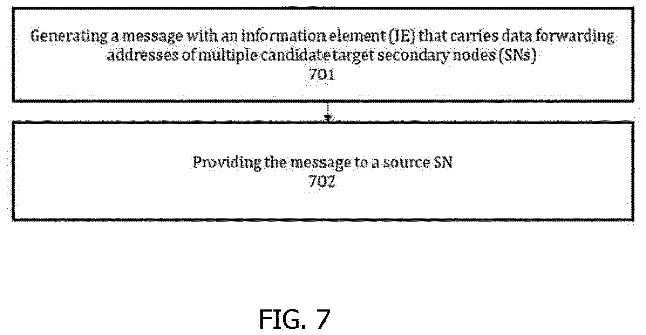

In some embodiments, the electronic device(s), network(s), system(s), chip(s) or component(s), or portions or implementations thereof, of FIGs. 4-6, or some other figure herein, may be configured to perform one or more processes, techniques, or methods as described herein, or portions thereof. One such process is depicted in FIG. 7.

The process may relate to a method to be performed by an electronic device that implements a master node (MN) for a cellular network, or one or more elements of the electronic device. The process may include generating, at 701, a message with an information element (IE) that carries data forwarding addresses of multiple candidate target secondary nodes (SNs); and providing, at 702, the message to a source SN.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include in one embodiment, an information element (IE) in the SgNB CHANGE CONFIRM (X2AP) or SN CHANGE CONFIRM (XnAP) messages to carry data forwarding addresses of multiple candidate target SNs, to enable MN to be able to provide them to the source SN.

Example 2 may include in one embodiment, a mechanism wherein MN invokes an MN-initiated signaling procedure instead of the SgNB CHANGE CONFIRM (X2AP) or SN CHANGE CONFIRM (XnAP) messages to provide data forwarding addresses of multiple candidate target SNs to the source SN during the SN-initiated inter-SN conditional PSCell change procedure.

Example 3 may include in one embodiment, where MN, as per example 2 or some other example herein, wherein invokes the signaling procedure to the source SN separately for each candidate target SN, each signaling carrying data forwarding addresses of one candidate target SN at a time

Example 4 may include in one embodiment, where, as per example 3 or some other example herein, wherein the signaling from MN indicates the ID of the candidate target SN which this signaling carries data forwarding addresses for.

Example 5 may include in one embodiment, where, as per example 3 or some other example herein, wherein the signaling message used by MN is the DATA FORWARDING ADDRESSS (X2AP) or Xn-U ADDRESS INDICATION (XnAP) messages.

Example 6 may include a method to be performed by an electronic device that implements a master node (MN) for a cellular network, or one or more elements of the electronic device, wherein the method comprises:
generating a message with an information element (IE) that carries data forwarding addresses of multiple candidate target secondary nodes (SNs); and
providing the message to a source SN.

Example 7 may include the method of example 6, and/or some other example herein, wherein the message is a SgNB CHANGE CONFIRM (X2AP) message.

Example 8 may include the method of example 6, and/or some other example herein, wherein the message is a SN CHANGE CONFIRM (XnAP) message.

In Example 9 or any one of Examples provided herein, the subject matter may include an apparatus of an access node configured for operation in a fifth generation (5G) network, the apparatus may include: processing circuitry configured to: generate a message with an information element (IE) may include data forwarding addresses of multiple candidate secondary nodes (SNs); and provide the message to a source secondary node (SN).

In Example 10 or any one of Examples provided herein, the subject matter of example 9, can optionally include that the generated message includes an SGNB CHANGE CONFIRM message or an SN CHANGE CONFIRM message carrying data forwarding addresses of the multiple candidate SNs.

In Example 11 or any one of Examples provided herein, the subject matter of example 10, can optionally include that the access node includes a Master eNodeB (MeNB) and the source SN includes an en-gNB; and can optionally include that the generated message includes the SGNB CHANGE CONFIRM message.

In Example 12 or any one of Examples provided herein, the subject matter of example 11, can optionally include that the SGNB CHANGE CONFIRM message includes a DL Forwarding GTP Tunnel Endpoint information element.

In Example 13 or any one of Examples provided herein, the subject matter of example 10, can optionally include that the access node includes a Master next generation radio access network (NG-RAN) node and the source SN includes a secondary NG-RAN node; and can optionally include that the generated message includes the S-NODE CHANGE CONFIRM message.

In Example 14 or any one of Examples provided herein, the subject matter of example 13, can optionally include that the S-NODE CHANGE CONFIRM message includes a Protocol Data Unit (PDU) Session Resource Change Confirm Info - SN terminated.

In Example 15 or any one of Examples provided herein, the subject matter of any one of examples 9 to 14, can optionally include that the message is generated within an SN initiated conditional inter-SN change procedure.

In Example 16 or any one of Examples provided herein, the subject matter of example 15, can optionally include that the SN initiated conditional SN procedure causes the access node to prepare multiple potential target Primary Secondary Cells (PSCells) with the multiple candidate SNs and to configure to the UE by radio resource control (RRC).

In Example 17 or any one of Examples provided herein, the subject matter of example 16, can optionally include that the multiple candidate SNs are identified by a list of prepared candidate target SN identifiers.

In Example 18 or any one of Examples provided herein, the subject matter may include a method for a master node configured for operation on a fifth generation (5G) network, the method includes: generating a message with an information element (IE) may include data forwarding addresses of multiple candidate secondary nodes (SNs); and providing the message to a source secondary node (SN).

In Example 19 or any one of Examples provided herein, the subject matter of example 18, can optionally include that the generated message includes an SGNB CHANGE CONFIRM message or an SN CHANGE CONFIRM message carrying data forwarding addresses of the multiple candidate SNs.

In Example 20 or any one of Examples provided herein, the subject matter of example 19, can optionally include that the master node includes a Master eNodeB (MeNB) and the source SN includes an en-gNB; and can optionally include that the generated message includes the SGNB CHANGE CONFIRM message.

In Example 21 or any one of Examples provided herein, the subject matter of example 20, can optionally include that the SGNB CHANGE CONFIRM message includes a DL Forwarding GTP Tunnel Endpoint information element.

In Example 22 or any one of Examples provided herein, the subject matter of example 21, can optionally include that the master node includes a Master next generation radio access network (NG-RAN) node and the source SN includes a secondary NG-RAN node; and can optionally include that the generated message includes the S-NODE CHANGE CONFIRM message.

In Example 23 or any one of Examples provided herein, the subject matter of example 22, can optionally include that the S-NODE CHANGE CONFIRM message includes a Protocol Data Unit (PDU) Session Resource Change Confirm Info - SN terminated.

In Example 24 or any one of Examples provided herein, the subject matter of any one of examples 18 to 23, can optionally include that the message is generated within an SN initiated conditional inter-SN change procedure.

In Example 25 or any one of Examples provided herein, the subject matter of example 24, can optionally include that the SN initiated conditional SN procedure causes the access node to prepare multiple potential target Primary Secondary Cells (PSCells) with the multiple candidate SNs and to configure to the UE by radio resource control (RRC).

In Example 18 or any one of Examples provided herein, the subject matter of example 25, can optionally include that the multiple candidate SNs are identified by a list of prepared candidate target SN identifiers.

In Example 26 or any one of Examples provided herein, a non-transitory computer-readable medium may include one or more instructions which, if executed by a processor of an access node of a fifth generation (5G) network, cause the processor to perform a method of any one of examples 18 to 25 or any one of Examples provided herein.

Example Z01 may include an apparatus comprising means to perform one or more elements of a method described in or related to any of examples 1-8, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-8, or any other method or process described herein.

Example Z03 may include an apparatus comprising logic, modules, or circuitry to perform one or more elements of a method described in or related to any of examples 1-8, or any other method or process described herein.

Example Z04 may include a method, technique, or process as described in or related to any of examples 1-8, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-8, or portions thereof.

Example Z06 may include a signal as described in or related to any of examples 1-8, or portions or parts thereof.

Example Z07 may include a datagram, packet, frame, segment, protocol data unit (PDU), or message as described in or related to any of examples 1-8, or portions or parts thereof, or otherwise described in the present disclosure.

Example Z08 may include a signal encoded with data as described in or related to any of examples 1-8, or portions or parts thereof, or otherwise described in the present disclosure.

Example Z09 may include a signal encoded with a datagram, packet, frame, segment, protocol data unit (PDU), or message as described in or related to any of examples 1-8, or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-8, or portions thereof.

Example Z11 may include a computer program comprising instructions, wherein execution of the program by a processing element is to cause the processing element to carry out the method, techniques, or process as described in or related to any of examples 1-8, or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

3GPP may refer to Third Generation Partnership Project; 4G may refer to Fourth Generation; 5G may refer to Fifth Generation; 5GC may refer to 5G Core network; AC may refer to Application Client; ACR may refer to Application Context Relocation; ACK may refer to Acknowledgement; ACID may refer to Application Client Identification; AF may refer to Application Function; AM may refer to Acknowledged Mode; AMBR may refer to Aggregate Maximum Bit Rate; AMF may refer to Access and Mobility Management Function; AN may refer to Access Network; ANR may refer to Automatic Neighbour Relation; AOA may refer to Angle of Arrival; AP may refer to Application Protocol, Antenna Port, Access Point; API may refer to Application Programming Interface; APN may refer to Access Point Name; ARP may refer to Allocation and Retention Priority; ARQ may refer to Automatic Repeat Request; AS may refer to Access Stratum; ASP Application Service Provider may refer to Application Service Provider; ASN.1 may refer to Abstract Syntax Notation One; AUSF may refer to Authentication Server Function; AWGN may refer to Additive White Gaussian Noise; BAP may refer to Backhaul Adaptation Protocol; BCH may refer to Broadcast Channel; BER may refer to Bit Error Ratio; BFD may refer to Beam Failure Detection; BLER may refer to Block Error Rate; BPSK may refer to Binary Phase Shift Keying; BRAS may refer to Broadband Remote Access Server; BSS may refer to Business Support System; BS may refer to Base Station; BSR may refer to Buffer Status Report; BW may refer to Bandwidth; BWP may refer to Bandwidth Part; C-RNTI may refer to Cell Radio Network Temporary Identity; CA may refer to Carrier Aggregation, Certification Authority; CAPEX may refer to CAPital Expenditure; CBRA may refer to Contention Based Random Access; CC may refer to Component Carrier, Country Code, Cryptographic Checksum; CCA may refer to Clear Channel Assessment; CCE may refer to Control Channel Element; CCCH may refer to Common Control Channel; CE may refer to Coverage Enhancement; CDM may refer to Content Delivery Network; CDMA may refer to Code-Division Multiple Access; CDR may refer to Charging Data Request; CDR may refer to Charging Data Response; CFRA may refer to Contention Free Random Access; CG may refer to Cell Group; CGF may refer to Charging Gateway Function; CHF may refer to Charging Function; CI may refer to Cell Identity; CID may refer to Cell-ID (e.g., positioning method); CIM may refer to Common Information Model; CIR may refer to Carrier to Interference Ratio ; CK may refer to Cipher Key; CM may refer to Connection Management, Conditional Mandatory; CMAS may refer to Commercial Mobile Alert Service; CMD may refer to Command; CMS may refer to Cloud Management System; CO may refer to Conditional Optional; CoMP may refer to Coordinated Multi-Point; CORESET may refer to Control Resource Set; COTS may refer to Commercial Off-The-Shelf; CP may refer to Control Plane, Cyclic Prefix, Connection Point; CPD may refer to Connection Point Descriptor; CPE may refer to Customer Premise Equipment; CPICH may refer to Common Pilot Channel; CQI may refer to Channel Quality Indicator; CPU may refer to CSI processing unit, Central Processing Unit; C/R may refer to Command/Response field bit; CRAN may refer to Cloud Radio Access Network, Cloud RAN; CRB may refer to Common Resource Block; CRC may refer to Cyclic Redundancy Check; CRI may refer to Channel-State Information Resource Indicator, CSI-RS Resource Indicator; C-RNTI may refer to Cell RNTI; CS may refer to Circuit Switched; CSCF may refer to call session control function; CSAR may refer to Cloud Service Archive; CSI may refer to Channel-State Information; CSI-IM may refer to CSI Interference Measurement; CSI-RS may refer to CSI Reference Signal; CSI-RSRP may refer to CSI reference signal received power; CSI-RSRQ may refer to CSI reference signal received quality; CSI-SINR may refer to CSI signal-to-noise and interference ratio; CSMA may refer to Carrier Sense Multiple Access; CSMA/CA may refer to CSMA with collision avoidance ; CSS may refer to Common Search Space, Cell-specific Search Space; CTF may refer to Charging Trigger Function; CTS may refer to Clear-to-Send; CW may refer to Codeword; CWS may refer to Contention Window Size; D2D may refer to Device-to-Device; DC may refer to Dual Connectivity, Direct Current; DCI may refer to Downlink Control Information; DF may refer to Deployment Flavour; DL may refer to Downlink; DMTF may refer to Distributed Management Task Force; DPDK may refer to Data Plane Development Kit; DM-RS, DMRS may refer to Demodulation Reference Signal; DN may refer to Data network; DNN may refer to Data Network Name; DNAI may refer to Data Network Access Identifier; DRB may refer to Data Radio Bearer; DRS may refer to Discovery Reference Signal; DRX may refer to Discontinuous Reception; DSL may refer to Domain Specific Language. Digital Subscriber Line; DSLAM may refer to DSL Access Multiplexer; DwPTS may refer to Downlink Pilot Time Slot; E-LAN may refer to Ethernet Local Area Network; E2E may refer to End-to-End; EAS may refer to Edge Application Server; ECCA may refer to extended clear channel assessment, extended CCA; ECCE may refer to Enhanced Control Channel Element, Enhanced CCE; ED may refer to Energy Detection; EDGE may refer to Enhanced Datarates for GSM Evolution (GSM Evolution); EAS may refer to Edge Application Server; EASID may refer to Edge Application Server Identification; ECS may refer to Edge Configuration Server; ECSP may refer to Edge Computing Service Provider; EDN may refer to Edge Data Network; EEC may refer to Edge Enabler Client; EECID may refer to Edge Enabler Client Identification; EES may refer to Edge Enabler Server; EESID may refer to Edge Enabler Server Identification; EHE may refer to Edge Hosting Environment; EGMF may refer to Exposure Governance Management Function; EGPRS may refer to Enhanced GPRS ; EIR may refer to Equipment Identity Register; eLAA may refer to enhanced Licensed Assisted Access, enhanced LAA; EM may refer to Element Manager; eMBB may refer to Enhanced Mobile Broadband; EMS may refer to Element Management System; eNB may refer to evolved NodeB, E-UTRAN Node B; EN-DC may refer to E-UTRA-NR Dual Connectivity; EPC may refer to Evolved Packet Core; EPDCCH may refer to enhanced PDCCH, enhanced Physical Downlink Control Cannel; EPRE may refer to Energy per resource element; EPS may refer to Evolved Packet System; EREG may refer to enhanced REG, enhanced resource element groups; ETSI may refer to European Telecommunications Standards Institute; ETWS may refer to Earthquake and Tsunami Warning System; eUICC may refer to embedded UICC, embedded Universal Integrated Circuit Card; E-UTRA may refer to Evolved UTRA; E-UTRAN may refer to Evolved UTRAN; EV2X may refer to Enhanced V2X; F1AP may refer to F1 Application Protocol; F1-C may refer to F1 Control plane interface; F1-U may refer to F1 User plane interface; FACCH may refer to Fast Associated Control CHannel; FACCH/F may refer to Fast Associated Control Channel/Full rate; FACCH/H may refer to Fast Associated Control Channel/Half rate ; FACH may refer to Forward Access Channel; FAUSCH may refer to Fast Uplink Signalling Channel; FB may refer to Functional Block; FBI may refer to Feedback Information; FCC may refer to Federal Communications Commission; FCCH may refer to Frequency Correction CHannel; FDD may refer to Frequency Division Duplex; FDM may refer to Frequency Division Multiplex; FDMA may refer to Frequency Division Multiple Access; FE may refer to Front End; FEC may refer to Forward Error Correction; FFS may refer to For Further Study; FFT may refer to Fast Fourier Transformation; feLAA may refer to further enhanced Licensed Assisted Access, further enhanced LAA ; FN may refer to Frame Number; FPGA may refer to Field-Programmable Gate Array; FR may refer to Frequency Range; FQDN may refer to Fully Qualified Domain Name; G-RNTI may refer to GERAN Radio Network Temporary Identity; GERAN may refer to GSM EDGE RAN, GSM EDGE Radio Access Network; GGSN may refer to Gateway GPRS Support Node; GLONASS may refer to GLObal'naya NAvigatsionnaya Sputnikovaya Sistema (Engl.: Global Navigation Satellite System); gNB may refer to Next Generation NodeB; gNB-CU may refer to gNB-centralized unit, Next Generation NodeB centralized unit; gNB-DU may refer to gNB-distributed unit, Next Generation NodeB distributed unit; GNSS may refer to Global Navigation Satellite System; GPRS may refer to General Packet Radio Service; GPSI Generic Public Subscription may refer to Identifier; GSM may refer to Global System for Mobile Communications, Groupe Spécial Mobile; GTP may refer to GPRS Tunneling Protocol; GTP-U may refer to GPRS Tunnelling Protocol for User Plane; GTS may refer to Go To Sleep Signal (related to WUS); GUMMEI may refer to Globally Unique MME Identifier; GUTI may refer to Globally Unique Temporary UE Identity; HARQ may refer to Hybrid ARQ, Hybrid Automatic Repeat Request; HANDO may refer to Handover; HFN may refer to HyperFrame Number; HHO may refer to Hard Handover; HLR may refer to Home Location Register; HN may refer to Home Network; HO may refer to Handover; HPLMN may refer to Home Public Land Mobile Network; HSDPA may refer to High Speed Downlink Packet Access; HSN may refer to Hopping Sequence Number; HSPA may refer to High Speed Packet Access; HSS may refer to Home Subscriber Server; HSUPA may refer to High Speed Uplink Packet Access; HTTP may refer to Hyper Text Transfer Protocol; HTTPS may refer to Hyper Text Transfer Protocol Secure (https is http/1.1 over SSL, i.e. port 443); I-Block may refer to Information Block; ICCID may refer to Integrated Circuit Card Identification; IAB may refer to Integrated Access and Backhaul ; ICIC may refer to Inter-Cell Interference Coordination; ID may refer to Identity, identifier; IDFT may refer to Inverse Discrete Fourier Transform; IE may refer to Information element; IBE may refer to In-Band Emission; IEEE may refer to Institute of Electrical and Electronics Engineers; IEI may refer to Information Element Identifier ; IEIDL may refer to Information Element Identifier Data Length; IETF may refer to Internet Engineering Task Force; IF may refer to Infrastructure ; IIOT may refer to Industrial Internet of Things; IM may refer to Interference Measurement, Intermodulation, IP Multimedia; IMC may refer to IMS Credentials; IMEI may refer to International Mobile Equipment Identity; IMGI may refer to International mobile group identity ; IMPI may refer to IP Multimedia Private Identity; IMPU may refer to IP Multimedia PUblic identity; IMS may refer to IP Multimedia Subsystem; IMSI may refer to International Mobile Subscriber Identity; IoT may refer to Internet of Things; IP may refer to Internet Protocol; Ipsec may refer to IP Security, Internet Protocol Security; IP-CAN may refer to IP-Connectivity Access Network; IP-M may refer to IP Multicast; IPv4 may refer to Internet Protocol Version 4; IPv6 may refer to Internet Protocol Version 6; IR may refer to Infrared; IS may refer to In Sync; IRP may refer to Integration Reference Point; ISDN may refer to Integrated Services Digital Network ; ISIM may refer to IM Services Identity Module; ISO may refer to International Organisation for Standardisation; ISP may refer to Internet Service Provider; IWF may refer to Interworking-Function; I-WLAN may refer to Interworking WLANConstraint length of the convolutional code, USIM Individual key; kB may refer to Kilobyte (1000 bytes); kbps may refer to kilo-bits per second; Kc may refer to Ciphering key; Ki may refer to Individual subscriber authentication key; KPI may refer to Key Performance Indicator; KQI may refer to Key Quality Indicator; KSI may refer to Key Set Identifier; ksps may refer to kilo-symbols per second; KVM may refer to Kernel Virtual Machine; L1 may refer to Layer 1 (physical layer); L1-RSRP may refer to Layer 1 reference signal received power; L2 may refer to Layer 2 (data link layer); L3 may refer to Layer 3 (network layer); LAA may refer to Licensed Assisted Access; LAN may refer to Local Area Network; LADN may refer to Local Area Data Network ; LBT may refer to Listen Before Talk; LCM may refer to LifeCycle Management; LCR may refer to Low Chip Rate; LCS may refer to Location Services; LCID may refer to Logical Channel ID; LI may refer to Layer Indicator; LLC may refer to Logical Link Control, Low Layer Compatibility; LMF may refer to Location Management Function; LOS may refer to Line of Sight; LPLMN may refer to Local PLMN; LPP may refer to LTE Positioning Protocol; LSB may refer to Least Significant Bit; LTE may refer to Long Term Evolution; LWA may refer to LTE-WLAN aggregation; LWIP may refer to LTE/WLAN Radio Level Integration with IPsec Tunnel; LTE may refer to Long Term Evolution; M2M may refer to Machine-to-Machine; MAC may refer to Medium Access Control (protocol layering context) ; MAC may refer to Message authentication code (security/encryption context); MAC-A may refer to MAC used for authentication and key agreement (TSG T WG3 context); MAC-I may refer to MAC used for data integrity of signalling messages (TSG T WG3 context); MANO may refer to Management and Orchestration; MBMS may refer to Multimedia Broadcast and Multicast Service; MBSFN may refer to Multimedia Broadcast multicast service Single Frequency Network; MCC may refer to Mobile Country Code; MCG may refer to Master Cell Group; MCOT may refer to Maximum Channel Occupancy Time; MCS may refer to Modulation and coding scheme; MDAF may refer to Management Data Analytics Function; MDAS may refer to Management Data Analytics Service; MDT may refer to Minimization of Drive Tests; ME may refer to Mobile Equipment; MeNB may refer to master eNB; MER may refer to Message Error Ratio; MGL may refer to Measurement Gap Length; MGRP may refer to Measurement Gap Repetition Period; MIB may refer to Master Information Block, Management Information Base; MIMO may refer to Multiple Input Multiple Output; MLC may refer to Mobile Location Centre; MM may refer to Mobility Management; MME may refer to Mobility Management Entity; MN may refer to Master Node; MNO may refer to Mobile Network Operator; MO may refer to Measurement Object, Mobile Originated; MPBCH may refer to MTC Physical Broadcast CHannel; MPDCCH may refer to MTC Physical Downlink Control CHannel; MPDSCH may refer to MTC Physical Downlink Shared CHannel; MPRACH may refer to MTC Physical Random Access CHannel; MPUSCH may refer to MTC Physical Uplink Shared Channel; MPLS may refer to MultiProtocol Label Switching; MS may refer to Mobile Station; MSB may refer to Most Significant Bit; MSC may refer to Mobile Switching Centre; MSI may refer to Minimum System Information, MCH Scheduling Information; MSID may refer to Mobile Station Identifier; MSIN may refer to Mobile Station Identification Number; MSISDN may refer to Mobile Subscriber ISDN Number; MT may refer to Mobile Terminated, Mobile Termination; MTC may refer to Machine-Type Communications; mMTC may refer to massive MTC, massive Machine-Type Communications; MU-MIMO may refer to Multi User MIMO; MWUS may refer to MTC wake-up signal, MTC WUS; NACK may refer to Negative Acknowledgement; NAI may refer to Network Access Identifier; NAS may refer to Non-Access Stratum, Non-Access Stratum layer; NCT may refer to Network Connectivity Topology; NC-JT may refer to Non-Coherent Joint Transmission; NEC may refer to Network Capability Exposure; NE-DC may refer to NR-E-UTRA Dual Connectivity; NEF may refer to Network Exposure Function; NF may refer to Network Function; NFP may refer to Network Forwarding Path; NFPD may refer to Network Forwarding Path Descriptor; NFV may refer to Network Functions Virtualization; NFVI may refer to NFV Infrastructure; NFVO may refer to NFV Orchestrator; NG may refer to Next Generation, Next Gen; NGEN-DC may refer to NG-RAN E-UTRA-NR Dual Connectivity; NM may refer to Network Manager; NMS may refer to Network Management System; N-PoP may refer to Network Point of Presence; NMIB, N-MIB may refer to Narrowband MIB; NPBCH may refer to Narrowband Physical Broadcast CHannel; NPDCCH may refer to Narrowband Physical Downlink Control CHannel; NPDSCH may refer to Narrowband Physical Downlink Shared CHannel; NPRACH may refer to Narrowband Physical Random Access CHannel ; NPUSCH may refer to Narrowband Physical Uplink Shared CHannel ; NPSS may refer to Narrowband Primary Synchronization Signal; NSSS may refer to Narrowband Secondary Synchronization Signal; NR may refer to New Radio, Neighbour Relation; NRF may refer to NF Repository Function; NRS may refer to Narrowband Reference Signal; NS may refer to Network Service; NSA may refer to Non-Standalone operation mode; NSD may refer to Network Service Descriptor; NSR may refer to Network Service Record; NSSAI may refer to Network Slice Selection Assistance Information; S-NNSAI may refer to Single-NSSAI; NSSF may refer to Network Slice Selection Function; NW may refer to Network; NWUS may refer to Narrowband wake-up signal, Narrowband WUS; NZP may refer to Non-Zero Power; O&M may refer to Operation and Maintenance; ODU2 may refer to Optical channel Data Unit - type 2; OFDM may refer to Orthogonal Frequency Division Multiplexing; OFDMA may refer to Orthogonal Frequency Division Multiple Access; OOB may refer to Out-of-band; OOS may refer to Out of Sync; OPEX may refer to OPerating EXpense; OSI may refer to Other System Information; OSS may refer to Operations Support System; OTA may refer to over-the-air; PAPR may refer to Peak-to-Average Power Ratio; PAR may refer to Peak to Average Ratio; PBCH may refer to Physical Broadcast Channel; PC may refer to Power Control, Personal Computer; PCC may refer to Primary Component Carrier, Primary CC; P-CSCF may refer to Proxy CSCF; PCell may refer to Primary Cell; PCI may refer to Physical Cell ID, Physical Cell Identity; PCEF may refer to Policy and Charging Enforcement Function; PCF may refer to Policy Control Function; PCRF may refer to Policy Control and Charging Rules Function; PDCP may refer to Packet Data Convergence Protocol, Packet Data Convergence Protocol layer; PDCCH may refer to Physical Downlink Control Channel; PDCP may refer to Packet Data Convergence Protocol; PDN may refer to Packet Data Network, Public Data Network; PDSCH may refer to Physical Downlink Shared Channel; PDU may refer to Protocol Data Unit; PEI may refer to Permanent Equipment Identifiers; PFD may refer to Packet Flow Description; P-GW may refer to PDN Gateway; PHICH may refer to Physical hybrid-ARQ indicator channel; PHY may refer to Physical layer; PLMN may refer to Public Land Mobile Network; PIN may refer to Personal Identification Number; PM may refer to Performance Measurement; PMI may refer to Precoding Matrix Indicator; PNF may refer to Physical Network Function; PNFD may refer to Physical Network Function Descriptor; PNFR may refer to Physical Network Function Record; POC may refer to PTT over Cellular; PP, PTP may refer to Point-to-Point; PPP may refer to Point-to-Point Protocol; PRACH may refer to Physical RACH; PRB may refer to Physical resource block; PRG may refer to Physical resource block group; ProSe may refer to Proximity Services, Proximity-Based Service; PRS may refer to Positioning Reference Signal; PRR may refer to Packet Reception Radio; PS may refer to Packet Services; PSBCH may refer to Physical Sidelink Broadcast Channel; PSDCH may refer to Physical Sidelink Downlink Channel; PSCCH may refer to Physical Sidelink Control Channel; PSSCH may refer to Physical Sidelink Shared Channel; PSFCH physical sidelink feedback may refer to channel; PSCell may refer to Primary SCell; PSS may refer to Primary Synchronization Signal; PSTN may refer to Public Switched Telephone Network; PT-RS may refer to Phase-tracking reference signal; PTT may refer to Push-to-Talk; PUCCH may refer to Physical Uplink Control Channel; PUSCH may refer to Physical Uplink Shared Channel; QAM may refer to Quadrature Amplitude Modulation; QCI may refer to QoS class of identifier; QCL may refer to Quasi co-location; QFI may refer to QoS Flow ID, QoS Flow Identifier; QoS may refer to Quality of Service; QPSK may refer to Quadrature (Quaternary) Phase Shift Keying; QZSS may refer to Quasi-Zenith Satellite System; RA-RNTI may refer to Random Access RNTI; RAB may refer to Radio Access Bearer, Random Access Burst; RACH may refer to Random Access Channel; RADIUS may refer to Remote Authentication Dial In User Service; RAN may refer to Radio Access Network; RAND may refer to RANDom number (used for authentication); RAR may refer to Random Access Response; RAT may refer to Radio Access Technology; RAU may refer to Routing Area Update; RB may refer to Resource block, Radio Bearer; RBG may refer to Resource block group; REG may refer to Resource Element Group; Rel may refer to Release; REQ may refer to REQuest; RF may refer to Radio Frequency; RI may refer to Rank Indicator; RIV may refer to Resource indicator value; RL may refer to Radio Link; RLC may refer to Radio Link Control, Radio Link Control layer; RLC AM may refer to RLC Acknowledged Mode; RLC UM may refer to RLC Unacknowledged Mode; RLF may refer to Radio Link Failure; RLM may refer to Radio Link Monitoring; RLM-RS may refer to Reference Signal for RLM; RM may refer to Registration Management; RMC may refer to Reference Measurement Channel; RMSI may refer to Remaining MSI, Remaining Minimum System Information; RN may refer to Relay Node; RNC may refer to Radio Network Controller; RNL may refer to Radio Network Layer; RNTI may refer to Radio Network Temporary Identifier; ROHC may refer to RObust Header Compression; RRC may refer to Radio Resource Control, Radio Resource Control layer; RRM may refer to Radio Resource Management; RS may refer to Reference Signal; RSRP may refer to Reference Signal Received Power; RSRQ may refer to Reference Signal Received Quality; RSSI may refer to Received Signal Strength Indicator; RSU may refer to Road Side Unit; RSTD may refer to Reference Signal Time difference; RTP may refer to Real Time Protocol; RTS may refer to Ready-To-Send; RTT may refer to Round Trip Time; Rx may refer to Reception, Receiving, Receiver; S1AP may refer to S1 Application Protocol; S1-MME may refer to S1 for the control plane; S1-U may refer to S1 for the user plane; S-CSCF may refer to serving CSCF; S-GW may refer to Serving Gateway; S-RNTI may refer to SRNC Radio Network Temporary Identity; S-TMSI may refer to SAE Temporary Mobile Station Identifier; SA may refer to Standalone operation mode; SAE may refer to System Architecture Evolution; SAP may refer to Service Access Point; SAPD may refer to Service Access Point Descriptor; SAPI may refer to Service Access Point Identifier; SCC may refer to Secondary Component Carrier, Secondary CC; SCell may refer to Secondary Cell; SCEF may refer to Service Capability Exposure Function; SC-FDMA may refer to Single Carrier Frequency Division Multiple Access; SCG may refer to Secondary Cell Group; SCM may refer to Security Context Management; SCS may refer to Subcarrier Spacing; SCTP may refer to Stream Control Transmission Protocol; SDAP may refer to Service Data Adaptation Protocol, Service Data Adaptation Protocol layer; SDL may refer to Supplementary Downlink; SDNF may refer to Structured Data Storage Network Function; SDP may refer to Session Description Protocol; SDSF may refer to Structured Data Storage Function; SDT may refer to Small Data Transmission; SDU may refer to Service Data Unit; SEAF may refer to Security Anchor Function; SeNB may refer to secondary eNB; SEPP may refer to Security Edge Protection Proxy; SFI may refer to Slot format indication; SFTD may refer to Space-Frequency Time Diversity, SFN and frame timing difference; SFN may refer to System Frame Number; SgNB may refer to Secondary gNB; SGSN may refer to Serving GPRS Support Node; S-GW may refer to Serving Gateway ; SI may refer to System Information; SI-RNTI may refer to System Information RNTI; SIB may refer to System Information Block; SIM may refer to Subscriber Identity Module; SIP may refer to Session Initiated Protocol; SiP may refer to System in Package; SL may refer to Sidelink; SLA may refer to Service Level Agreement; SM may refer to Session Management; SMF may refer to Session Management Function; SMS may refer to Short Message Service; SMSF may refer to SMS Function; SMTC may refer to SSB-based Measurement Timing Configuration ; SN may refer to Secondary Node, Sequence Number; SoC may refer to System on Chip; SON may refer to Self-Organizing Network; SpCell may refer to Special Cell; SP-CSI-RNTI may refer to Semi-Persistent CSI RNTI; SPS may refer to Semi-Persistent Scheduling; SQN may refer to Sequence number; SR may refer to Scheduling Request; SRB may refer to Signalling Radio Bearer; SRS may refer to Sounding Reference Signal; SS may refer to Synchronization Signal; SSB may refer to Synchronization Signal Block; SSID may refer to Service Set Identifier; SS/PBCH may refer to Block ; SSBRI may refer to SS/PBCH Block Resource Indicator, Synchronization Signal Block Resource Indicator; SSC may refer to Session and Service Continuity; S-SN may refer to Source SN; SS-RSRP may refer to Synchronization Signal based Reference Signal Received Power; SS-RSRQ may refer to Synchronization Signal based Reference Signal Received Quality; SS-SINR may refer to Synchronization Signal based Signal to Noise and Interference Ratio; SSS may refer to Secondary Synchronization Signal; SSSG may refer to Search Space Set Group; SSSIF may refer to Search Space Set Indicator; SST may refer to Slice/Service Types; SU-MIMO may refer to Single User MIMO; SUL may refer to Supplementary Uplink; TA may refer to Timing Advance, Tracking Area; TAC may refer to Tracking Area Code; TAG may refer to Timing Advance Group; TAI may refer to Tracking Area Identity; TAU may refer to Tracking Area Update; TB may refer to Transport Block; TBS may refer to Transport Block Size; TBD may refer to To Be Defined; TCI may refer to Transmission Configuration Indicator; TCP may refer to Transmission Communication Protocol; TDD may refer to Time Division Duplex; TDM may refer to Time Division Multiplexing; TDMA may refer to Time Division Multiple Access; TE may refer to Terminal Equipment; TEID may refer to Tunnel End Point Identifier; TFT may refer to Traffic Flow Template; TMSI may refer to Temporary Mobile Subscriber Identity; TNL may refer to Transport Network Layer; TPC may refer to Transmit Power Control; TPMI may refer to Transmitted Precoding Matrix Indicator; TR may refer to Technical Report; TRP, TRxP may refer to Transmission Reception Point; TRS may refer to Tracking Reference Signal; TRx may refer to Transceiver; TS may refer to Technical Specifications, Technical Standard; T-SN may refer to Target SN; TTI may refer to Transmission Time Interval; Tx may refer to Transmission, Transmitting, Transmitter; U-RNTI may refer to UTRAN Radio Network Temporary Identity; UART may refer to Universal Asynchronous Receiver and Transmitter; UCI may refer to Uplink Control Information; UE may refer to User Equipment; UDM may refer to Unified Data Management; UDP may refer to User Datagram Protocol; UDSF may refer to Unstructured Data Storage Network Function; UICC may refer to Universal Integrated Circuit Card; UL may refer to Uplink; UM may refer to Unacknowledged Mode; UML may refer to Unified Modelling Language; UMTS may refer to Universal Mobile Telecommunications System; UP may refer to User Plane; UPF may refer to User Plane Function; URI may refer to Uniform Resource Identifier; URL may refer to Uniform Resource Locator ; URLLC may refer to Ultra-Reliable and Low Latency; USB may refer to Universal Serial Bus; USIM may refer to Universal Subscriber Identity Module; USS may refer to UE-specific search space; UTRA may refer to UMTS Terrestrial Radio Access; UTRAN may refer to Universal Terrestrial Radio Access Network; UwPTS may refer to Uplink Pilot Time Slot; V2I may refer to Vehicle-to-Infrastruction; V2P may refer to Vehicle-to-Pedestrian; V2V may refer to Vehicle-to-Vehicle ; V2X may refer to Vehicle-to-everything; VIM may refer to Virtualized Infrastructure Manager; VL may refer to Virtual Link, ; VLAN may refer to Virtual LAN, Virtual Local Area Network; VM may refer to Virtual Machine; VNF may refer to Virtualized Network Function; VNFFG may refer to VNF Forwarding Graph; VNFFGD may refer to VNF Forwarding Graph Descriptor; VNFM may refer to VNF Manager ; VoIP may refer to Voice-over-IP, Voice-over-Internet Protocol; VPLMN may refer to Visited Public Land Mobile Network; VPN may refer to Virtual Private Network ; VRB may refer to Virtual Resource Block; WiMAX may refer to Worldwide Interoperability for Microwave Access; WLAN may refer to Wireless Local Area Network; WMAN may refer to Wireless Metropolitan Area Network; WPAN may refer to Wireless Personal Area Network; X2-C may refer to X2-Control plane; X2-U may refer to X2-User plane; XML may refer to eXtensible Markup Language ; XRES may refer to EXpected user RESponse; XOR may refer to eXclusive OR; ZC may refer to Zadoff-Chu; ZP may refer to Zero Power;

### Terminology

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by SSB-MeasurementTimingConfiguration.

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

MR-DC is a generalization of the Intra-E-UTRA Dual Connectivity (DC) described in 3gpp TS 36.300 specification (e.g. R-17). A multiple Rx/Tx capable UE may be configured to utilize resources provided by two different nodes connected via non-ideal backhaul, one providing NR access and the other one providing either E-UTRA or NR access. One node acts as the MN and the other as the SN. The MN and SN are connected via a network interface and at least the MN is connected to the core network. In EN-DC, UE is connected to one eNB that acts as a MN and one en-gNB that acts as a SN. The en-gNB might also be connected to the EPC via the S1-U interface and other en-gNBs via the X2-U interface. In NG-RAN E-UTRA-NR Dual Connectivity (NGEN-DC), a UE is connected to one ng-eNB that acts as a MN and one gNB that acts as a SN. In NR-E-UTRA Dual Connectivity (NE-DC), a UE is connected to one gNB that acts as a MN and one ng-eNB that acts as a SN. In NR-DC, a UE is connected to one gNB that acts as a MN and another gNB that acts as a SN. In addition, NR-DC can also be used when a UE is connected to a single gNB, acting both as a MN and as a SN, and configuring both MCG and SCG.

The SN Change procedure is a procedure initiated either by MN or SN and used to transfer a UE context from a source SN to a target SN and to change the SCG configuration in UE from one SN to another. In an SN-initiated SN Change procedure, the source SN initiates the SN change procedure. In an SN-initiated SN Change procedure with SGNB CHANGE CONFIRM message (i.e. in EN-DC), the en-gNB (i.e. source SN) initiates the procedure by sending SGNB CHANGE REQUIRED message, and in a successful operation (i.e. if the MeNB is able to perform the change requested) the MeNB (i.e. MN) sends the SGNB CHANGE CONFIRM message to the en-gNB. In an SN-initiated SN Change procedure with SN CHANGE CONFIRM message (S-NODE CHANGE CONFIRM message) (i.e. in MR-DC), the S-NG-RAN node (i.e. source SN) initiates the procedure by sending SN CHANGE REQUIRED message (S-NODE CHANGE REQUIRED), and in a successful operation (i.e. if the M-NG-RAN is able to perform the change requested) the M-NG-RAN (i.e. MN) sends the SN CHANGE CONFIRM message (S-NODE CHANGE CONFIRM) to the S-NG-RAN node.

## Claims

1. An apparatus of an access node configured for operation in a fifth generation (5G) network, the apparatus comprising processing circuitry configured to:
generate a message with an information element (IE) comprising data forwarding addresses of multiple candidate secondary nodes (SNs);
provide the message to a source secondary node (SN).

2. The apparatus of claim 1,
wherein the generated message comprises an SGNB CHANGE CONFIRM message or an SN CHANGE CONFIRM message carrying data forwarding addresses of the multiple candidate SNs.

3. The apparatus of claim 2,
wherein the access node comprises a Master eNodeB (MeNB) and the source SN comprises an en-gNB;
wherein the generated message comprises the SGNB CHANGE CONFIRM message.

4. The apparatus of claim 3,
wherein the SGNB CHANGE CONFIRM message comprises a DL Forwarding GTP Tunnel Endpoint information element.

5. The apparatus of claim 2,
wherein the access node comprises a Master next generation radio access network (NG-RAN) node and the source SN comprises a secondary NG-RAN node;
wherein the generated message comprises the S-NODE CHANGE CONFIRM message.

6. The apparatus of claim 5,
wherein the S-NODE CHANGE CONFIRM message comprises a Protocol Data Unit (PDU) Session Resource Change Confirm Info - SN terminated.

7. The apparatus of any one of claims 1 to 6,
wherein the message is generated within an SN initiated conditional inter-SN change procedure.

8. The apparatus of claim 7,
wherein the SN initiated conditional SN procedure causes the access node to prepare multiple potential target Primary Secondary Cells (PSCells) with the multiple candidate SNs and to configure to the UE by radio resource control (RRC).

9. The apparatus of claim 8,
wherein the multiple candidate SNs are identified by a list of prepared candidate target SN identifiers.

10. A method for a master node configured for operation on a fifth generation (5G) network, the method comprises:
generating a message with an information element (IE) comprising data forwarding addresses of multiple candidate secondary nodes (SNs);
providing the message to a source secondary node (SN).

11. The method of claim 10,
wherein the generated message comprises an SGNB CHANGE CONFIRM message or an SN CHANGE CONFIRM message carrying data forwarding addresses of the multiple candidate SNs.

12. The method of claim 11,
wherein the master node comprises a Master eNodeB (MeNB) and the source SN comprises an en-gNB;
wherein the generated message comprises the SGNB CHANGE CONFIRM message.

13. The method of claim 12,
wherein the SGNB CHANGE CONFIRM message comprises a DL Forwarding GTP Tunnel Endpoint information element.

14. The method of claim 11,
wherein the master node comprises a Master next generation radio access network (NG-RAN) node and the source SN comprises a secondary NG-RAN node;
wherein the generated message comprises the S-NODE CHANGE CONFIRM message.

15. A non-transitory computer-readable medium comprising one or more instructions which, if executed by a processor of an access node of a fifth generation (5G) network, cause the processor to perform a method of any one of claims 10 to 14.
